Europäisches Patentamt

(19) European Patent Office

Office européen des brevets

(11) Numéro de publication : **0 342 067 B1**

(12) **FASCICULE DE BREVET EUROPEEN**

(45) Date de publication du fascicule du brevet :
23.10.91 Bulletin 91/43

(51) Int. Cl.⁵ : **C08L 67/00, C08L 23/08**

(21) Numéro de dépôt : 89400734.3

(22) Date de dépôt : 16.03.89

(54) Compositions thermoplastiques à base de polymère de l'éthylène et de polyester.

(30) Priorité : 30.03.88 FR 8804193

(43) Date de publication de la demande :
15.11.89 Bulletin 89/46

(45) Mention de la délivrance du brevet :
23.10.91 Bulletin 91/43

(84) Etats contractants désignés :
AT BE CH DE ES FR GB GR IT LI LU NL SE

(56) Documents cités :
EP-A- 0 141 733
EP-A- 0 268 287
WO-A-85/03718
FR-A- 2 602 514
US-A- 3 888 943

(56) Documents cités :
DIE ANGEWANDTE MAKROMOLEKULARE
CHEMIE vol. 154, septembre 1987, pages
111-120, éditeur Dietrich Braun et al., Hüthig &
Wepf Verlag, Basel, CH; M. HERT et
al.:"Reactive olefinic copolymers"* page 112,
lignes 1-15; page 120, lignes 4-11*

(73) Titulaire : ATOCHEM
4 & 8, Cours Michelet La Défense 10
F-92800 Puteaux (FR)

(72) Inventeur : Hert, Marius
13 Avenue Lepercq
F-60550 Verneuil en Halatte (FR)

(74) Mandataire : Rochet, Michel et al
ATOCHEM Département Propriété Industrielle
4, Cours Michelet La Défense 10 Cedex 42
F-92091 Paris-La-Défense (FR)

## Description

La présente invention concerne des alliages de copolymères souples de l'éthylène et de polyesters saturés, utilisables notamment pour la production d'articles moulés ayant une bonne stabilité dimensionnelle à chaud.

Il est très difficile, dans un alliage à base de polyester saturé, de combiner les propriétés suivantes : faible module élastique en flexion (souplesse), bonne résistance au choc à froid et, d'autre part bonnes propriétés dynamométriques et bonne stabilité dimensionnelle à des températures supérieures à 100°C. Le mélange d'un polymère souple avec un polyester saturé, destiné à améliorer la tenue thermique et les propriétés dynamométriques de ce dernier, se traduit souvent lors de l'injection par une démixtion donnant des couches superficielles fragiles, sujettes à délamination. Ces inconvénients constituent les problèmes techniques que la présente invention vise à résoudre.

La demande de brevet européen n° 268287 (KANEGAFUCHI) publiée le 25.05.88, décrit une composition comprenant :

(a) 100 parties en poids d'un polyester thermoplastique,

(b) de 1 à 100 parties en poids d'un polymère à fonction époxy possédant un module d'élasticité en flexion d'au plus $10^4$ kg/cm$^2$ à température ambiante, et

(c) de 0,5 à 100 parties en poids d'un copolymère d'α-oléfine et d'un acide carboxylique α, β-insaturé dont au moins 5% des groupes carboxyliques sont neutralisés par un métal alcalin.

Le polymère (b) peut être un copolymère, greffé ou non, d'éthylène, de (méth)acrylate de glycidyle et, facultativement, de jusqu'à 10% en moles d'acétate de vinyle ou de (méth)acrylate de méthyle. Le copolymère (c) peut être un ionomère de sodium d'un copolymère d'éthylène, d'acide (méth)acrylique et, (méth)acrylate d'alkyle en $C_1$-$C_{10}$.

Le procédé d'obtention de cette composition est choisi de manière à éviter la gélification de la composition pendant sa mise en oeuvre.

L'objet de la présente invention consiste en des compositions thermoplastiques comprenant au moins 40% en poids et au plus 70% en poids d'une phase polymère réticulée obtenue par mélange de :

a) au moins un copolymère de 96 à 55% environ en poids d'éthylène, de 3 à 30% environ en poids d'au moins un acrylate ou méthacrylate d'alkyle ou cycloalkyle dont le groupe alkyle ou cycloalkyle possède de 1 à 10 atomes de carbone, et de 1 à 15% environ en poids d'au moins un époxyde insaturé,

b) au moins un copolymère comprenant de 84 à 55% environ d'éthylène en poids, de 15 à 39% environ en poids d'au moins un acrylate ou méthacrylate d'alkyle ou cycloalkyle dont le groupe alkyle ou cycloalkyle possède de 1 à 10 atomes de carbone, et de 1 à 6% environ en poids d'au moins un anhydride d'acide dicarboxylique insaturé, et

c) au moins un composé capable d'accélérer la réaction entre la fonction époxy présente dans le copolymère (a) et la fonction anhydride présente dans le copolymère (b),

avec au moins 30% en poids au plus 60% en poids d'au moins un polyester saturé.

Dans le cadre de la présente invention, il est nécessaire que le composé (c) soit en quantité suffisante, vis-à-vis des copolymères (a) et (b), pour jouer efficacement son rôle de promoteur de la réticulation au moins partielle de la composition polymère. La détermination de la quantité efficace de composé (c) est à la portée de l'homme de l'art, une fois fixées les proportions d'époxyde dans le copolymère (a) et d'anhydride dans le copolymère (b).

Enfin la présence simultanée des composants (a) et (b) est indispensable à l'efficacité de la présente invention, la présence du composant (a) seul ayant pour effet désavantageux de conférer à la composition un indice de fluidité trop faible c'est-à-dire une viscosité inadaptée à la transformation par la technique d'injection.

Des exemples d'acrylate ou méthacrylate d'alkyle utilisables comme constituants des copolymères (a) et (b) sont notamment le méthacrylate de méthyle, l'acrylate d'éthyle, l'acrylate de n-butyle, l'acrylate d'isobutyle, l'acrylate de 2-éthylhexyle, l'acrylate de méthyle, l'acrylate de tertio-butyle et le méthacrylate de n-butyle. Des exemples d'époxydes insaturés utilisables comme constituants du polymère (a) sont notamment :

— les esters et éthers de glycidyle aliphatiques tels que l'allylglycidyléther, le vinylglycidyléther, le maléate et l'itaconate de glycidyle, l'acrylate et le méthacrylate de glycidyle, et

— les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Des exemples d'anhydrides d'acide dicarboxylique insaturé utilisables comme constituants du polymère (b) sont notamment l'anhydride maléique, l'anhydride itaconique, l'anhydride citraconique et l'anhydride tétrahydrophtalique.

Parmi les composés (c) capables d'accélérer la réaction entre la fonction époxy présente dans le copoly-

2

EP 0 342 067 B1

mère (a) et la fonction anhydride présente dans le copolymère (b) on peut citer notamment :

— des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylènediamine, la tétraméthylguanidine, la triéthylènediamine, la tétraméthylhydrazine, la N,N-diméthylpipérazine, la N,N,N′,N′-tétraméthyl-1,6-hexanediamine.

— des phosphines tertiaires telles que la triphénylphosphine.

— des alkyldithiocarbamates de zinc ou de tellure.

Le copolymère (a) entrant dans la composition du polymère renforçant selon l'invention peut avoir un indice de fluidité (déterminé à 190°C sous 2,16 kg selon norme ASTM D 1238) choisi dans une gamme allant de 1 à 50 dg/min., de préférence 5 à 20 dg/min. Le copolymère (b) entrant dans la composition du polymère renforçant selon l'invention peut avoir un indice de fluidité (déterminé comme ci-dessus) choisi dans une gamme allant de 1 à 50 dg/min.

Les proportions respectives des copolymères (a) et (b) dans la phase polymère réticulée peuvent être telles que le rapport en poids (a)/(b) soit compris entre 0,1 et 10 environ, de préférence entre 0,5 et 2. Ces proportions pourront notamment être choisies par l'homme de l'art en fonction des teneurs respectives en anhydride du copolymère (b) et en époxyde insaturé du copolymère (a) ; de préférence ces proportions sont choisies de telle sorte que le rapport entre les fonctions anhydrides présentes dans le copolymère (b) et les fonctions époxydes présentes dans le copolymère (a) soit à peu près équimoléculaire.

Le polyester saturé entrant dans la composition thermoplastique selon l'invention peut être choisi parmi les produits de condensation saturés linéaires de glycols et d'acides dicarboxyliques, ou de leurs dérivés réactifs. De préférence, il comprend le produit de condensation d'au moins un acide dicarboxylique choisi parmi les acides dicarboxyliques aliphatiques ayant de 4 à 8 atomes de carbone, les acides dicarboxyliques alicycliques ayant de 8 à 12 atomes de carbone et les acides dicarboxyliques aromatiques ayant de 8 à 14 atomes de carbone, tel que par exemple l'acide phtalique, l'acide isophtalique, l'acide 2,6-naphtalène dicarboxylique, l'acide 4,4′-diphényldicarboxylique, l'acide adipique, l'acide sébacique ou l'acide cyclohexanedicarboxylique, et d'au moins un diol choisi parmi les glycols ayant de 2 à 10 atomes de carbone et les diols alicycliques ou aromatiques ayant de 6 à 15 atomes de carbone, tel que par exemple l'éthylène glycol, le propane-1,3-diol, le butane-1,4-diol, le pentane-1,5-diol, l'hexane-1,6-diol, le cyclohexane-1,4-diméthanol, le 2,2-diméthylpropane-1,3-diol, le 2,2-bis(4′-hydroxyphényl)-propane, le 2,2-bis (4′-hydroxycyclohexyl)propane et l'hydroquinone.

Les polyesters préférés sont le poly-1,4-butylène téréphtalate et le polyéthylène téréphtalate. De préférence leur viscosité intrinsèque est choisie dans une gamme allant de 0,3 à 1,2 dl/g environ (mesurée à 25°C à concentration de 0,5% en poids dans un mélange equipondéral de phénol et tétrachloréthane).

Les compositions selon l'invention peuvent être modifiées par un ou plusieurs additifs classiques tels que:

— des stabilisants qui peuvent être incorporés dans la composition à un stade quelconque de sa préparation. De préférence, les stabilisants sont inclus assez tôt pour empêcher un début de dégradation avant que la composition puisse être protégée, et doivent être compatibles avec les ingrédients principaux de la composition. Des agents stabilisant la viscosité tels que des polycarbodiimides peuvent être utilisés. Des agents de stabilisation à l'oxydation et à la chaleur utiles dans les matières de la présente invention comprennent ceux utilisés dans les polymères d'addition tels que, par exemple, des phénols stériquement encombrés, des hydroquinones, des amines secondaires, et leurs combinaisons. Des agents de stabilisation contre le rayonnement ultraviolet, par exemple dans une proportion allant jusqu'à 2% en poids environ par rapport au poids du polyester saturé, peuvent aussi être ceux utilisés dans les polymères d'addition tel que, par exemple, des résorcinols substitués, salicylates, benzotriazoles, benzophénones, etc.

— des lubrifiants et agents de démoulage, utilisés par exemple dans des proportions allant jusqu'à 1% par rapport au poids de la composition, tels que l'acide stéarique, l'alcool stéarique, les stéréamides, etc.

— des colorants et/ou pigments tels que notamment, à raison de jusqu'à 5% en poids de la composition, la nigrosine, le bioxyde de titane, le sulfure de cadmium, le sulfoséléniure de cadmiun, les phtalocyamines, le bleu d'outremer, le noir de carbone, etc.

— des charges pulvérulentes, utilisables jusqu'à 50% par rapport au pois de la composition, telles que par exemple, du silicate de calcium ou d'aluminium, du carbonate de magnésium, du kaolin, de la craie, du quartz pulvérisé, du mica, du feldspath, etc.

— des agents de nucléation tel que fluorure de calcium, polytétrafluoréthylène ou autre composé fluoré.

— jusqu'à 30 parties en poids environ, pour 100 parties en poids des polymères totaux, d'au moins une huile plastifiante compatible avec le copolymère d'éthylène et ayant un point éclair au moins égal à 220°C. Parmi ces plastifiants, on peut citer les huiles de paraffines et d'isoparaffines, les huiles naphténiques, aromatiques et les phtalates d'alkyle.

— des retardateurs d'inflammation comprenant de 1 à 10% en poids d'oxydes de métaux plurivalents comme le fer, l'étain, l'antimoine, le zinc, le cuivre, le magnésium et le plomb, en combinaison avec de 3

3

à 20% en poids de composés aromatiques et cycloaliphatiques halogénés comme l'hexabromobenzène, l'oxyde de décabromobiphényle, le carbonate d'hexabromodiphényle, des dérivés de bisphénol A halogéné comme le diacétate de tétrabromobisphénol A, etc.

Les compositions selon l'invention peuvent être préparées en mélangeant à l'état fondu dans un système clos, le polyester saturé et les composants de la phase polymère réticulée en un mélange uniforme dans une boudineuse à vis multiples telle qu'une boudineuse Werner Pfeiderer ayant généralement de 2 à 5 blocs de malaxage et au moins un pas inverse pour produire un cisaillement intense, c'est-à-dire selon un gradient de cisaillement au moins égal à 500 s$^{-1}$, ou d'autres dispositifs classiques de plastification comme les malaxeurs Brabender, Banbury, Buss, etc. Cette étape de préparation est de préférence effectuée à une température comprise entre 200 et 290°C et pendant une durée comprise entre 1 et 8 minutes environ.

Les compositions selon l'invention présentent un excellent compromis de propriétés se traduisant généralement par :

— une résistance à la rupture (selon la norme ASTM D-638) au moins égale à 14 MPa,

— un allongement à la rupture dans le sens transversal (selon la norme ASTM D-638) au moins égal à 100%,

— un module élastique en torsion (selon la norme ISO 537 mesurée à 100°C) au moins égal à 5 MPa,

— une stabilité dimensionnelle à 150°C (selon la norme ASTM D-1204) au plus égale à 10%, et

— une résistance au choc Izod entaillé (selon la norme ASTM D-256) au moins égale à 1000 J/m.

Les compositions selon l'invention trouvent des applications de choix pour la réalisation d'articles souples injectés, par exemple pour constituer des éléments de chaussures de sport, des tubes résistant aux hautes températures et de soufflets de protection pour l'industrie automobile.

Les exemples suivants donnés à titre illustratif. Les propriétés mentionnées au tableau ci-après sont les suivantes.

RR L = Résistance à la rupture dans le sens longitudinal, mesurée selon la norme ASTM D-638, exprimée en MPa

RR T = Résistance à la rupture dans le sens transversal, mesurée selon la norme ASTM D-638, exprimée en MPa

AR T = Allongement à la rupture dans le sens transversal, mesuré selon la norme ASTM D-638, exprimé en %

M.E.T. = Module élastique en torsion, mesuré selon la norme ISO 537 à 100°C, exprimé en MPa

S.D. = Stabilité dimensionnelle, mesurée à 150°C selon la norme ASTM D-1204 sur des éprouvettes injectées en forme de barreau, et exprimée en pourcentage de retrait dans le sens longidutinal.

## EXEMPLE 1 (comparatif)

On considère une composition constituée de 50 parties en poids d'un polybutylène térèphtalate (PBT) d'indice de fluidité (déterminé à 250°C sous 5 kg) égal à 79,3 dg/min commercialisé par la société B.A.S.F. sous l'appellation ULTRADUR® 4550 et de 50 parties en poids d'un terpolymère d'indice de fluidité (déterminé à 190°C sous 2,16 kg) égal à 7 dg/min et constitué de 68% en poids d'éthylène, 30% en poids d'acrylate d'éthyle et 2% en poids d'anhydride maléique, commercialisé par la société NORSOLOR sous l'appellation LOTADER® 4700.

Cette composition est préparée sur un comalaxeur BUSS PR 46 à une vitesse de vis de 180 t/min et une température matière de 260°C pendant 2 minutes et 30 secondes.

Cette composition est mal adaptée à une transformation par la technique d'injection puisque les articles obtenus présentent de la délamination pendant leur injection sur presse Engel à 260°C.

Cette composition présente les propriétés indiquées au tableau ci-après.

## EXEMPLE 2

On prépare dans les conditions de l'exemple 1, une composition constituée de 50 parties en poids de PBT ULTRADUR® 4550, de 38 parties en poids de LOTADER® 4700 et 12 parties en poids d'un terpolymère comprenant 79% en poids d'éthylène, 9% en poids d'acrylate d'éthyle et 12% en poids de méthacrylate de glycidyle (MAGLY) d'indice de fluidité (déterminé à 190° sous 2,16 kg) égal à 11 dg/min. Cette composition est formulée avec 0,24 partie de diméthyl-stéarylamine.

L'alliage est injecté sur presse Engel à 280°C et donne des articles moulés d'un bel aspect, possédant les propriétés indiquées au tableau ci-après.

EXEMPLE 3

On prépare dans les conditions de l'exemple 1 une composition comprenant :
— 50 parties de PBT ULTRADUR® 4550
— 40 parties de LOTADER® 4700
— 10 parties d'un terpolymère constitué de 85% en poids d'éthylène, 6% en poids d'acrylate d'éthyle et 9% en poids de MAGLY, d'indice de fluidité égal à 8 dg/min à 190°C.
— 0,3 partie de diméthyl stéarylamine
Les pièces injectées sont d'un bel aspect et possèdent les propriétés indiquées au tableau ci-après.

EXEMPLE 4 (comparatif)

On prépare dans les conditions de l'exemple 1 une composition comprenant :
— 60 parties de LOTADER® 4700
— 40 parties de PBT ULTRADUR® 4550
L'injection conduit à des pièces hétérogènes à l'échelle visuelle et se délaminant, se déformant au delà de 120°C.

EXEMPLE 5

On prépare dans les conditions de l'exemple 1 une composition comprenant :
— 40 parties de PBT ULTRADUR® 4550
— 50 parties de LOTADER® 4700
— 10 parties de terpolymère comprenant 85% en poids d'éthylène, 6% en poids d'acrylate d'éthyle et 9% en poids de MAGLY d'indice de fluidité égal à 8 dg/min à 190°C.
— 0,5 partie de diméthylstéarylamine.
L'alliage injecté sur presse Engel à 280°C donne des articles moulés d'un bel aspect, possédant les propriétés indiquées au tableau ci-après.

EXEMPLE 6

On prépare dans les conditions de l'exemple 1 une composition comprenant :
— 40 parties de PBT ULTRADUR® 4550
— 45 parties de LOTADER® 4700
— 15 parties de terpolymère comprenant 94% en poids d'éthylène, 3% en poids d'acrylate d'éthyle et 3% en poids de MAGLY, d'indice de fluidité égal à 7 dg/min à 190°C.
— 0,36 partie de diméthylstéarylamine.
Après injection sur presse Engel à 280°C, on obtient des articles moulés ayant un bel aspect et possèdant les propriétés indiquées au tableau ci-après.

EXEMPLE 7

On prépare dans les conditions de l'exemple 1 une composition comprenant :
— 55 parties de PBT ULTRADUR® 4550
— 36 parties de LOTADER® 4700
— 9 parties de terpolymère comprenant 85% en poids d'éthylène, 6% en poids d'acrylate d'éthyle et 9% en poids de MAGLY, d'indice de fluidité égal à 8 dg/min à 190°C.
— 0,24 partie de diméthylstéarylamine.
L'alliage injecté sur presse Engel à 280°C conduit à des articles moulés ayant un très bel aspect et possèdant une très bonne résistance à la rupture. Les propriétés de l'alliage moulé figurent au tableau ci-après.

TABLEAU

| Exemple<br><br>Propriété | 1 | 2 | 3 | 4 | 5 | 6 | 7 |
|---|---|---|---|---|---|---|---|
| RR L | 12 | 20 | 21 | 10 | 21 | 14 | 26 |
| RR T | 6 | 17 | 17 | 4 | 14 | 11 | 19 |
| AR T | 41 | 141 | 102 | 38 | 160 | 111 | 105 |
| M.E.T. | < 1 | 31 | n.d. | < 1 | n.d. | 14 | n.d. |
| S.D. | 20 | 0 | n.d. | 30 | 0 | 0 | 0 |

n.d. : non déterminé

**Revendications**

1. Composition thermoplastique comprenant au moins 40% en poids et au plus 70% en poids d'une phase polymère réticulée obtenue par mélange de :

a) au moins un copolymère de 96 à 55% en poids d'éthylène, de 3 à 30% en poids d'au moins un acrylate ou méthacrylate d'alkyle ou cycloalkyle dont le groupe alkyle ou cycloalkyle possède de 1 à 10 atomes de carbone, et de 1 à 15% en poids d'au moins un époxyde insaturé,

b) au moins un copolymère comprenant de 84 à 55% d'éthylène en poids, de 15 à 39% en poids d'au moins un acrylate ou méthacrylate d'alkyle ou cycloalkyle dont le groupe alkyle ou cycloalkyle possède de 1 à 10 atomes de carbone, et de 1 à 6% en poids d'au moins anhydride d'acide dicarboxylique insaturé, et

c) au moins un composé capable d'accélérer la réaction entre la fonction époxy présente dans le copolymère (a) et la fonction anhydride présente dans le copolymère (b),

avec au moins 30% en poids mais au plus 60% en poids d'au moins un polyester saturé.

2. Composition selon la revendication 1, caractérisée en ce que les proportions respectives des copolymères (a) et (b) dans la phase polymère réticulée sont telles que le rapport en poids (a)/(b) soit compris entre 0,1 et 10.

3. Composition selon la revendication 1, caractérisée en ce que le composé (c) est choisi parmi les amines tertiaires, les phosphines tertiaires et les alkyldithiocarbamates de zinc.

4. Composition selon l'une des revendications 1 à 3, caractérisée en ce que l'époxyde insaturé du copolymère (a) est le méthacrylate de glycidyle.

5. Composition selon l'une des revendications 1 à 4, caractérisée en ce que l'anhydride d'acide dicarboxylique insaturé du copolymère (b) est anhydride maléïque.

6. Composition selon l'une des revendications 1 à 5, caractérisée en ce que l'indice de fluidité du copolymère (a) est de 1 à 50 dg/min.

7. Composition selon l'une des revendications 1 à 6, caractérisée en ce que l'indice de fluidité du copolymère (b) est de 1 à 50 dg/min.

8. Composition selon l'une des revendications 1 à 7, caractérisée en ce que le polyester saturé est choisi le polyéthylène terephtalate et le poly-1,4-butylène terephtalate.

9. Composition selon l'une des revendications 1 à 8, caractérisée en ce que la viscosité intrinsèque du polyester saturé est de 0,3 à 1,2 cm$^3$/g.

10. Composition selon l'une des revendications 1 à 9, caractérisée en ce qu'elle comprend en outre au moins une charge pulvérulente.

11. Composition selon l'une des revendications 1 à 10, caractérisée en ce qu'elle comprend en outre au moins un stabilisant.

12. Composition selon l'une des revendications 1 à 11, caractérisée en ce qu'elle comprend en outre au moins un lubrifiant.

13. Composition selon l'une des revendications 1 à 12, caractérisée en ce qu'elle comprend en outre au moins un retardateur d'inflammation.

14. Composition selon l'une des revendications 1 à 13, caractérisée en ce qu'elle comprend en outre au moins un pigment et/ou colorant.

15. Procédé de préparation d'une composition selon la revendication 1, caractérisé en ce qu'on mélange à l'état fondu le polyester saturé et les composants de la phase polymère réticulée dans un dispositif produisant un gradient de cisaillement au moins égal à 500 s⁻¹.

16. Procédé selon la revendication 15, caractérisé en ce que la préparation est effectuée à une température comprise entre 200° et 290°C et pendant une durée comprise entre 1 et 8 minutes.


**Patentansprüche**

1. Thermoplastische Zusammensetzung, die mindestens 40 Gew.-% und höchstens 70 Gew.-% einer vernetzten, polymeren Phase enthält, die gewonnen wird durch Mischen von :

a) mindestens einem Copolymeren aus 96 bis 55 Gew.-% Ethylen, 3 bis 30 Gew.-% mindestens eines Alkyl- oder Cycloalkylacrylates oder -methacrylates, dessen Alkyl- oder Cycloalkylgruppe 1 bis 10 Kohlenstoffatome aufweist, und 1 bis 15 Gew.-% mindestens eines ungesättigten Epoxids,

b) mindestens einem Copolymeren aus 84 bis 55 Ge.-% Ethylen, 15 bis 39 Gew.-% mindestens eines Alkyl- oder Cycloalkylacrylates oder -methacrylates, dessen Alkyl- oder Cycloalkylgruppe 1 bis 10 Kohlenstoffatome aufweist, und 1 bis 6 Gew.-% mindestens eines ungesättigten Dicarbonsäureanhydrids und

c) mindestens einer Verbindung, die die Reaktion zwischen der in dem Copolymer (a) vorliegenden Epoxyfunktion und der in dem Copolymeren (b) vorliegenden Anhydridfunktion zu beschleunigen imstande ist, mit mindestens 30 Gew.-%, jedoch höchstens 60 Gew.-% mindestens eines gesättigten Polyesters.

2. Zusammensetzung nach Anspruch 1, **dadurch gekennzeichnet**, daß die jeweiligen Anteile der Copolymeren (a) und (b) in der vernetzten polymeren Phase so sind, daß das Gewichtsverhältnis (a)/(b) zwischen 0,1 und 10 liegt.

3. Zusammensetzung nach Anspruch 1, **dadurch gekennzeichnet**, daß die Verbindung (c) ausgewählt ist aus tertiären Aminen, tertiären Phosphinen und Zink-Alkyldithiocarbamaten.

4. Zusammensetzung nach einem der Ansprüche 1 bis 3, **dadurch gekennzeichnet**, daß das ungesättigte Epoxid des Copolymeren (a) das Glycidylmethacrylat ist.

5. Zusammensetzung nach einem der Ansprüche 1 bis 4, **dadurch gekennzeichnet**, daß das ungesättigte Dicarbonsäureanhydrid des Copolymeren (b) Maleinsäureanhydrid ist.

6. Zusammensetzung nach einem der Ansprüche 1 bis 5, **dadurch gekennzeichnet**, daß der Fluiditätsindex des Copolymeren (a) zwischen 1 und 50 dg/min liegt.

7. Zusammensetzung nach einem der Ansprüche 1 bis 6, **dadurch gekennzeichnet**, daß der Fluiditätsindex des Copolymeren (b) zwischen 1 und 50 dg/min liegt.

8. Zusammensetzung nach einem der Ansprüche 1 bis 7, **dadurch gekennzeichnet**, daß der gesättigte Polyester ausgewählt wird aus Polyethylenterephthalat und Poly-1,4-butylenterephthalat.

9. Zusammensetzung nach einem der Ansprüche 1 bis 8, **dadurch gekennzeichnet**, daß die Grundviskosität des gesättigten Polyesters bei 0,3 bis 1,2 cm³/g liegt.

10. Zusammensetzung nach einem der Ansprüche 1 bis 9, **dadurch gekennzeichnet**, daß sie außerdem mindestens einen pulverförmigen Zuschlagstoff enthält.

11. Zusammensetzung nach einem der Ansprüche 1 bis 10, **dadurch gekennzeichnet**, daß sie außerdem mindestens ein Stabilisiermittel enthält.

12. Zusammensetzung nach einem der Ansprüche 1 bis 11, **dadurch gekennzeichnet**, daß sie außerdem mindestens ein Schmiermittel enthält.

13. Zusammensetzung nach einem der Ansprüche 1 bis 12, **dadurch gekennzeichnet**, daß sie außerdem mindestens einen Brandverzögerer enthält.

14. Zusammensetzung nach einem der Ansprüche 1 bis 13, **dadurch gekennzeichnet**, daß sie außerdem mindestens ein Pigment und/oder einen Farbstoff enthält.

15. Verfahren zur Herstellung einer Zusammensetzung nach Anspruch 1, **dadurch gekennzeichnet**, daß man den gesättigten Polyester und die Bestandteile der vernetzten polymeren Phase in geschmolzenem Zustand in einer Vorrichtung mischt, die einen Schergradienten von mindestens 500 s⁻¹ bedingt.

16. Verfahren nach Anspruch 15, **dadurch gekennzeichnet**, daß die Herstellung bei einer Temperatur zwischen 200°C und 290°C während eines Zeitraums von 1 bis 8 min erfolgt.

**Claims**

1. Thermoplastic composition comprising at least 40% by weight and not more than 70% by weight of a crosslinked polymer phase obtained by blending :

a) at least one copolymer of 96 to 55% by weight of ethylene, of 3 to 30% by weight of at least one alkyl or cycloalkyl acrylate or methacrylate in which the alkyl or cycloalkyl group contains from 1 to 10 carbon atoms, and of 1 to 15% by weight of at least one unsaturated epoxide,

b) at least one copolymer comprising from 84 to 55% of ethylene by weight, from 15 to 39% by weight of at least one alkyl or cycloalkyl acrylate or methacrylate in which the alkyl or cycloalkyl group contains from 1 to 10 carbon atoms, and from 1 to 6% by weight of at least one anhydride of an unsaturated dicarboxylic acid, and

c) at least one compound capable of accelerating the reaction between the epoxy functional group present in the copolymer (a) and the anhydride functional group present in the copolymer (b),

with at least 30% by weight but not more than 60% by weight of at least one saturated polyester.

2. Composition according to Claim 1, characterised in that the respective proportions of copolymers (a) and (b) in the crosslinked polymer phase are such that the weight ratio (a)/(b) is between 0.1 and 10.

3. Composition according to Claim 1, characterised in that compound (c) is chosen from tertiary amines, tertiary phosphines and zinc alkyldithiocarbamates.

4. Composition according to one of Claims 1 to 3, characterised in that the unsaturated epoxide in copolymer (a) is glycidyl methacrylate.

5. Composition according to one of Claims 1 to 4, characterised in that the anhydride of an unsaturated dicarboxylic acid in copolymer (b) is maleic anhydride.

6. Composition according to one of Claims 1 to 5, characterised in that the melt index of copolymer (a) is from 1 to 50 dg/min.

7. Composition according to one of Claims 1 to 6, characterised in that the melt index of copolymer (b) is from 1 to 50 dg/min.

8. Composition according to one of Claims 1 to 7, characterised in that the saturated polyester is chosen from polyethylene terephthalate and poly-1,4-butylene terephthalate.

9. Composition according to one of Claims 1 to 8, characterised in that the intrinsic viscosity of the saturated polyester is from 0.3 to 1.2 cm$^3$/g.

10. Composition according to one of Claims 1 to 9, characterised in that it additionally comprises at least one pulverulent filler.

11. Composition according to one of Claims 1 to 10, characterised in that it additionally comprises at least one stabiliser.

12. Composition according to one of Claims 1 to 11, characterised in that it additionally comprises at least one lubricant.

13. Composition according to one of Claims 1 to 12, characterised in that it additionally comprises at least one flame retardant.

14. Composition according to one of Claims 1 to 13, characterised in that it additionally comprises at least one pigment and/or dye.

15. Process for the preparation of a composition according to Claim 1, characterised in that the saturated polyester and the components of the crosslinked polymer phase are melt-blended in a device producing a shear gradient of at least 500 s$^{-1}$.

16. Process according to Claim 15, characterised in that the preparation is carried out at a temperature of between 200° and 290°C and for a period of between 1 and 8 minutes.